# Europäisches Patentamt

# European Patent Office

# Office européen des brevets

(19)

(11) Veröffentlichungsnummer: **0 013 370**

**A1**

(12) ## EUROPÄISCHE PATENTANMELDUNG

(21) Anmeldenummer: **79105127.9**

(22) Anmeldetag: **13.12.79**

(51) Int. Cl.³: **C 08 G 18/66**

(30) Priorität: **28.12.78 DE 2856456**

(43) Veröffentlichungstag der Anmeldung:
**23.07.80 Patentblatt 80/15**

(84) Benannte Vertragsstaaten:
**BE DE FR GB IT NL**

(71) Anmelder: **BASF Aktiengesellschaft
Carl-Bosch-Strasse 38
D-6700 Ludwigshafen(DE)**

(72) Erfinder: **Barthelmes, Rudolf
Dubliner Strasse 25
D-6700 Ludwigshafen(DE)**

(72) Erfinder: **Jarre, Wolfgang, Dr. Dipl.-Chem.
Limesstrasse 3
D-6700 Ludwigshafen(DE)**

(72) Erfinder: **Kessler, Hansjuergen, Dr. Dipl.-Chem.
Schwanenstrasse 1 A
D-6800 Mannheim 51(DE)**

(72) Erfinder: **Zahn, Erwin, Dr. Dipl.-Chem.
Burgunder Strasse 42
D-6730 Neustadt 14(DE)**

(54) **Verfahren zur Herstellung von Polyurethan-Hartschaumstoffen.**

(57) Die Erfindung betrifft ein Verfahren zur Herstellung von Polyurethan-Hartschaumstoffen nach dem one shot-Verfahren aus Polyisocyanaten, Mischungen aus

a) 60 bis 80 Gew.% eines oder mehrerer di- bis octafunktioneller Polyätherole mit Hydroxylzahlen von 150 bis 1 000 und

b) 40 bis 20 Gew.% Dipropylenglykol und/oder Dibutylenglykol, wobei die Gew.% bezogen sind auf das Gesamtgewicht der Mischung,

Katalysatoren, Treibmitteln und gegebenenfalls Hilfsmitteln.

Die Polyurethan-Hartschaumstoffe besitzen Dichten von 20 bis 800 kg/m³ und zeichnen sich durch eine gute Dimensionsstabilität aus. Sie sind feinzellig, zäh-hart, haben eine hohe Druckfestigkeit und zeigen bei der Herstellung keine Kernverbrennung.

EP 0 013 370 A1

BASF Aktiengesellschaft                    O. Z. 0050/33593

<u>Verfahren zur Herstellung von Polyurethan-Hartschaumstoffen</u>

Die Erfindung betrifft ein Verfahren zur Herstellung von Polyurethan-Hartschaumstoffen aus Polyisocyanaten, Mischungen aus di- bis octafunktionellen Polyätherolen und Dipropylenglykol und/oder Dibutylenglykol als Polyole, Katalysatoren, Treibmittel und gegebenenfalls Hilfsmitteln.

Es ist bekannt, Polyurethan-Kunststoffe mit verschiedenartigen physikalischen Eigenschaften dadurch herzustellen, daß man Verbindungen mit mehreren aktiven Wasserstoffatomen, insbesondere Polyhydroxyverbindungen, mit Polyisocyanaten, gegebenenfalls unter Mitverwendung von Polymeren als Verstärkungsmitteln, Kettenverlängerungsmitteln, Vernetzungsmitteln, Treibmitteln, Aktivatoren, Emulgatoren und anderen Zusatzstoffen umsetzt. Bei geeigneter Wahl der Komponenten lassen sich auf diese Weise sowohl elastische als auch starre Schaumstoffe, Lackierungen, Imprägnierungen, Beschichtungen oder Elastomere herstellen.

Eine Übersicht über die Herstellung und Eigenschaften von Polyurethan-Hartschaumstoffen wird beispielsweise im Kunststoffhandbuch, Band VII "Polyurethane" von R. Vieweg und H. Höchtlen, Seiten 504 ff gegeben (Verlag Carl Hanser, München 1966).

M/Fe

Nach Angaben der DE-AS 1 719 274 werden zur Herstellung von Polyurethanschaumstoffen als Polyole Mischungen aus a) dem Reaktionsprodukt aus 2 bis 5 Äquivalenten Äthylenoxid, Propylenoxid, 1,2-Butylenoxid oder deren Gemische und 1 Aminäquivalent eines Polyamingemisches auf Basis Diamino-diphenylmethanen und Polyphenyl-polymethylen-polyaminen und b) einem zusätzlichen Polyol mit einem Äquivalentgewicht unter 200, einer Funktionalität zwischen 2 und 6, einer Säurezahl unter 10 und einer Viskosität bei 25 $^{\circ}$C von weniger als 20 000 m Pas verwendet. Nachteilig an dem beschriebenen Verfahren ist, daß die Polyolgemische Viskositäten von durchschnittlich über 4000 bis zu 18 000 m Pas/50$^{\circ}$C aufweisen und sich daher schlecht verarbeiten lassen.

Zur Behebung dieses Nachteils wird in der DE-AS 1 170 628 und DE-OS 2 114 303 vorgeschlagen, die hochviskosen Polyätherole mit niedermolekularen Glykolen zu mischen und auf diese Weise die Viskosität des Reaktionsgemisches zu verkleinern und die Fließeigenschaften zu verbessern. Durch Zusatz von niedermolekularen Diolen, wie Äthylenglykol und Propylenglykol in Mengen bis ungefähr 10 Gew.-%, bezogen auf das Polyolgemisch werden Polyurethan-Hartschaumstoffe mit guten mechanischen Eigenschaften erhalten. Werden die Diole jedoch in größeren Mengen verwendet, so erhält man schaumfähige Polyurethanmischungen mit unerwünscht hohen Reaktivitäten bzw. man erhält Polyurethanschaumstoffe mit grober Zellstruktur und gegebenenfalls Kernverbrennungen. Diese Verarbeitungsschwierigkeiten werden zwar geringer, wenn Diole mit höherem Molekulargewicht, d.h. mit längeren Alkylenresten zwischen den reaktiven Endgruppen verwendet werden; es ist andererseits jedoch bekannt, daß derartige Diole Hartschaumstoffe mit schlechten mechanischen Eigenschaften, wie Wärmeformbeständigkeit, Dimensionsstabilität und Druckfestigkeit ergeben. Es ist daher nicht möglich in Hartschaumstoffen größere Polyätherolmengen durch billige Diole, wie Butandiol-1.4 oder Hexandiol-1.6, zu ersetzen, sofern man nicht in Kauf nehmen möchte, daß die mechanischen Eigenschaften der Schaumstoffe in unvertretbarer Weise verschlechtert werden.

Zur Herstellung von Polyurethan-Weichschaumstoffen wurde ferner vorgeschlagen, Polyätherole mit Molekulargewichten von 2000 bis 4500 und Hydroxylzahlen von etwa 40 bis 80 mit urethanmodifizierten Toluylen-diisocyanaten nach dem Präpolymerverfahren umzusetzen (DE-AS 1 278 738). Nachteilig an diesem Verfahren ist insbesonders, daß die Addukte aus aromatischen Polyisocyanaten und Dipropylenglykol und/oder Dibutylenglykol in einem separaten Verfahrensschritt hergestellt werden müssen und Toluylen-diisocyanat aufgrund seines relativ hohen Dampfdruckes toxisch ist. Die Toxizität kann auch durch die Verwendung von derartigen Prepolymeren nicht wesentlich vermindert werden, da durch diese Maßnahme der Dampfdruck nur unwesentlich erniedrigt wird. Verwendet man Roh-MDI anstelle von Toluylen-diisocyanat zur Prepolymerherstellung, so erhält man mit Diglykolen klebstoffähnliche Harzmassen.

Aufgabe der vorliegenden Erfindung war es, Polyurethan-Hartschaumstoffe aus an sich bekannten Ausgangskomponenten herzustellen. Hierbei sollten die Hartschaumpolyätherole, die üblicherweise Hydroxylzahlen von 150 bis 1000 besitzen, teilweise durch billigere Diole ersetzt werden, ohne daß die mechanischen Eigenschaften der erhaltenen Polyurethan-Hartschaumstoffe nennenswert verschlechtert werden. Ferner durfte bei der Herstellung keine Kernverbrennung des Schaumstoffes eintreten.

Diese Aufgabe konnte überraschenderweise durch die Verwendung von Mischungen aus polyfunktionellen Polyätherolen und Dipropylenglykol und/oder Dibutylenglykol in bestimmten Mengenverhältnissen als Polyolkomponente gelöst werden.

Gegenstand der Erfindung ist somit ein Verfahren zur Herstellung von Polyurethan-Hartschaumstoffen nach dem wirtschaftlichen one shot-Verfahren aus Polyisocyanaten, Polyolen, Katalysatoren, Treibmitteln und ggf. Hilfsmitteln, das dadurch gekennzeichnet ist, daß man als Polyole Mischungen verwendet aus

a) 60 bis 80 Gew.-% eines oder mehrerer di- bis octafunktionellen Polyätherolen mit Hydroxylzahlen von 150 bis 1000 und

b) 40 bis 20 Gew.-% Dipropylenglykol und/oder Dibutylenglykol, wobei die Gew.-%e bezogen sind auf das Gesamtgewicht der Mischung.

Überraschend und keineswegs vorhersehbar war, daß durch die Auswahl von Dipropylenglykol und Dibutylenglykol aus der Vielzahl bekannter Kettenverlängerungsmittel bis zu 40 Gew.-% der Polyätherole durch diese speziellen Diglykole ersetzt werden können, ohne daß bei der Polyurethan-Hartschaumstoffherstellung eine Kernverbrennung auftritt und das mechanische Niveau der Hartschaumstoffe wesentlich beeinträchtigt wird.

Wie bereits ausgeführt wurde, ist erfindungswesentlich, daß zur Herstellung der Polyurethan-Hartschaumstoffe nach dem erfindungsgemäßen Verfahren als Polyole Mischungen verwendet werden aus

a) 60 bis 80 Gew.-%, vorzugsweise 70 bis 80 Gew.-%, bezogen auf das Gesamtgewicht eines oder mehrerer di- bis octafuntioneller, vorzugsweise tri- bis hexafunktioneller Polyätherole mit Hydroxylzahlen von 150 bis ungefähr 800 und

b)    40 bis 20 Gew.-%, vorzugsweise 30 bis 20 Gew.-%, bezogen auf das Gesamtgewicht, Dipropylenglykol oder Dibutylenglykol oder Mischungen aus den genannten ätherhaltigen Diglykolen.

Geeignete Polyätherole besitzen Molekulargewichte von ungefähr 200 bis ungefähr 1000, vorzugsweise von ungefähr 300
bis ungefähr 700 und Hydroxylzahlen von 150 bis 1000, vorzugsweise von 300 bis 700 und werden durch Umsetzung von
einem oder mehreren gegebenenfalls substituierten Alkylenoxiden mit 2 bis 4 Kohlenstoffatomen im Alkylenrest mit
einem Startermolekül, das mindestens zwei aktive Wasserstoffatome gebunden enthält, hergestellt. Als Alkylenoxide seien
beispielhaft genannt: 1,2- und 2,3-Butylenoxid, Styroloxid,
Epichlorhydrin, Tetrahydrofuran und vorzugsweise Äthylen-
und Propylenoxid. Die Äthylenoxide können einzeln, alternierend nacheinander oder als Mischungen verwendet werden.

Als Startermoleküle kommen beispielsweise in Betracht:
Wasser; Phosphorsäure; organische Dicarbonsäuren, wie
Bernsteinsäure, Adipinsäure, Phthalsäure und Terephthalsäure, aliphatische und aromatische, gegebenenfalls N-mono-,
N,N- und N,N'-dialkylsubstituierte Diamine mit 1 bis 4
Kohlenstoffatomen im Alkylrest, wie gegebenenfalls mono-
und dialkylsubstituiertes Äthylendiamin, Diäthylentriamin,
Triäthylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und
4,4'-, 2,4'- und 2,2'-Diamino-diphenylmethan ; Monoamine,
wie Methylamin, Äthylamin, Isopropylamin, Butylamin, Benzylamin, Anilin, die Toluidine und Naphthylamine. Von den
Verbindungen der erwähnten Gruppe sind besonders interessant N,N,N',N'-Tetrakis-(2-hydroxyäthyl)-äthylendiamin,
N,N,N',N'-Tetrakis-(2-hydroxypropyl)-äthylendiamin,
N,N,N',N'',N''-Pentakis-(2-hydroxypropyl-)äthylentriamin,

0013370

Phenyldiisopropanolamin und höhere Alkylenoxidaddukte von Anilin.

Als Startermoleküle kommen ferner in Betracht Ammoniak, Alkanolamine, wie Äthanolamin, Diäthanolamin, N-Methyl- und N-Äthyl-diäthanolamin, N-Methyl- und N-Äthyl-diäthanolamin und Triäthanolamin, Hydrazin und Hydrazide. Verwendet werden ferner mehrwertige, insbesondere drei- bis achtwertige Alkohole, wie Äthylenglykol, Propylenglykol-1,2 und -1,3, Diäthylenglykol, Dipropylenglykol, Butylenglykol-1,4, Hexamethylenglykol-1,6, Glycerin, Trimethylolpropan und Pentaerythrit, Sorbit, Glucose und Saccharose sowie Gemische der genannten mehrwertigen Alkohole.

Vorzugsweise verwendet werden Polyätherole, hergestellt aus Saccharose, und insbesondere Sorbit als Startermoleküle und Äthylenoxid und Propylenoxid als Alkylenoxide.

Dipropylenglykol ist der übliche Name für Bis-(2-hydroxy-2-methyläthyl)-äther und Dibutylenglykol für Bis-(2-hydroxy--2-äthyl-äthyl)-äther. Dipropylenglykol und Dibutylenglykol können sowohl einzeln wie in Form von Isomerengemischen oder Mischungen untereinander verwendet werden. Die Verbindungen und ihre Herstellung sind bekannt.

Als Polyisocyanate werden vorzugsweise Mischungen aus Diphenylmethan-diisocyanaten und Polyphenyl-polymethylen--polyisocyanaten (Roh-MDI) verwendet. Bewährt haben sich insbesonders solche Roh-MDI-Mischungen mit einem Gehalt an Diphenylmethan-diisocyanat-Isomeren von 40 bis 90 Gew.-%, vorzugsweise 40 bis 60 Gew.-%.

Zu Treibmitteln, welche im erfindungsgemäßen Verfahren verwendet werden können, gehört Wasser, das mit Isocyanatgruppen unter Bildung von Kohlendioxid reagiert. Die Was- sermengen, die zweckmäßigerweise verwendet werden, betragen 0,1 bis 5 Gew.-%, vorzugsweise 0,5 bis 2 Gew.-%, bezogen auf das Gewicht der Polyolmischung.

Andere verwendbare Treibmittel sind niedrigsiedende, unter den Reaktionsbedingungen inerte Flüssigkeiten, die unter dem Einfluß der exothermen Polyadditionsreaktion verdampfen. Geeignet sind Flüssigkeiten mit Siedepunkten von nicht über 70 °C bei Atmosphärendruck, vorzugsweise zwischen -40 °C und +50 °C. Beispiele derartiger, verwendbarer Flüssigkeiten sind niedrigsiedende Kohlenwasserstoffe, wie n-Propan, n-Butan, iso-Butane, Pentane und Hexane und vorzugsweise halogenierte Kohlenwasserstoffe, wie Methylenchlorid, Trichlorfluormethan, Dichlordifluormethan, Dichlormonofluormethan, 1,1-Dichlor-1--fluoräthan, 1,1-Difluor-1,2,2-trichloräthan, 1,2-Dichlor--tetrafluoräthan, 1,1,2-Trichlor-1,2,2-trifluoräthan und 1,1,1-Trichlor-2,2,2-trifluoräthan.

Die zweckmäßigste Menge an niedersiedender Flüssigkeit zur Herstellung von Hartschaumstoffen hängt von der Schaumdichte, die man erreichen will sowie gegebenenfalls von der Mitverwendung von Wasser ab. Im allgemeinen liefern Mengen von 5 bis 50 Gew.-%, bezogen auf 100 Gew.-Teile der Polyolmischung zufriedenstellende Ergebnisse.

Zur Beschleunigung der Umsetzung zwischen der erfindungsgemäß verwendbaren Polyolmischung gegebenenfalls Wasser als Treibmittel und den organischen Polyisocyanaten werden der Reaktionsmischung übliche Katalysatoren, beispielsweise tertiäre Amine, wie Dimethylbenzylamin, Dicyclohexylmethylamin, Dimethylcyclohexylamin, N-Methyl-bzw. N-Äthylmorpholin, Dimethylpiperazin, Pyridin, 1--Aza-bicyclo-(3,3,0)-octan, Dimethylaminoäthanol, 1,2--Dimethylimidazol, N,N,N',N'-Tetramethyl-1,3-butandiamin, Bis-(2-(N,N-dimethylamino)-äthyl)-äther und vorzugsweise

0013370

Triäthylendiamin, Metallsalze, wie Eisen-II-chlorid, Zinkchlorid und organische Zinnverbindungenm wie Stannooctoat, Stannoacetat, Stannoleat, Dibutylzinndiacetat und Dibutylzinndilaurat hinzugefügt. Es können auch Kombinationen von Katalysatoren verwendet werden; so z.B. ein oder mehrere tertiäre Amine in Kombination mit organischen Zinnverbindungen. Die Katalysatoren werden verwendet in Mengen von z.B. 0,01 bis 3 Gew.-%, beispielsweise 0,1 bis 2 Gew.-% tertiäre Amine und/oder 0,01 bis 0,2 Gew.-% Metallsalze oder organische Zinnverbindungen, bezogen auf das Gewicht der Polyolmischung.

Der Reaktionsmischung können auch noch Hilfsmittel einverleibt werden. Genannt seien beispielsweise Stabilisatoren, Hydrolysenschutzmittel, Porenregler, fungistatisch und bakteriostatisch wirkende Substanzen, Farbstoffe, Pigmente, Füllstoffe, oberflächenaktive Stoffe, Weichmacher und Flammschutzmittel.

In Betracht kommen beispielsweise oberflächenaktive Substanzen, welche zur Unterstützung der Homogenisierung der Ausgangsstoffe dienen und ggf. auch geeignet sind, die Zellstruktur der Schaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Rizinusöl- bzw. Rizinolsäureester und Türkischrotöl, die in Mengen von 0,2 bis 6 Gew.-Teilen pro 100 Gew.-Teile Polyisocyanat angewandt werden.

Es können ferner Flammschutzmittel verwendet werden, beispielsweise solche, die Phosphor und/oder Halogenatome enthalten. Zu solchen Mitteln gehören Trikresylphosphat, Tris--2-chloräthylphosphat, Tris-chlorpropylphosphat und Tris--2,3-dibrompropylphosphat.

Außer den bereits genannten halogensubstituierten Phosphaten können auch anorganische Flammschutzmittel, wie Antimontrioxid, Arsenoxid, Ammoniumphosphat und Calciumsulfat zum Flammfestmachen der Polyurethanschaumstoffe verwendet werden. Im allgemeinen hat es sich als vorteilhaft erwiesen, 5 bis 50 Gew.-Teile, vorzugsweise 5 bis 25 Gew.-Teile der genannten Flammschutzmittel für jeweils 100 Gew.-Teile an organischen Polyisocyanaten zu verwenden.

Nähere Angaben über die obengenannten anderen üblichen Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, zu entnehmen.

Die Polyurethan-Hartschaumstoffe werden erfindungsgemäß nach dem one shot-Verfahren hergestellt. Hierzu werden die Polyolmischung und die organischen Polyisocyanate bei Temperaturen von 10 bis 60 °C, vorzugsweise 18 bis 40 °C in solchen Mengenverhältnissen zur Umsetzung gebracht, daß pro Hydroxylgruppe vorzugsweise 1,05 bis 1,3 NCO-Gruppen des Polyisocyanats in der Reaktionsmischung vorliegen. Bei Verwendung einer Mischkammer mit mehreren Zulaufdüsen können das Polyisocyanat, die Polyolmischung, der Katalysator, Treibmittel und ggf. Hilfsstoffe als Einzelstoffe zugeführt und in der Mischkammer intensiv vermischt werden. Als besonders zweckmäßig hat es sich jedoch erwiesen, nach dem Zweikomponenten-Verfahren zu arbeiten und die Polyolmischung mit dem Katalysator, dem Treibmitteln und ggf. Hilfsmitteln zu der Komponente A zu vereinigen und als Komponente B die organischen Polyisocyanate zu verwenden. Vorteilhaft ist hierbei beispielsweise, daß die Komponenten A und B getrennt beschränkte Zeit gelagert und raumsparend transportiert werden können und vor der Verarbeitung in den erforderlichen Mengenverhältnissen nur noch intensiv gemischt werden müssen.

0013370

Die nach dem erfindungsgemäßen Verfahren hergestellten Polyurethan-Hartschaumstoffe besitzen Dichten von 20 bis 800 kg/m$^3$, vorzugsweise von 30 bis 80 kg/m$^3$ und zeichnen sich durch eine gute Dimensionsstabilität aus. Sie sind ferner feinzellig, zäh-hart und haben hohe Druckfestigkeiten.

Die Produkte werden vorzugsweise als Isoliermaterial verwendet.

Aufgrund der guten Fließfähigkeit der schaumfähigen Reaktionsmischung eignen sich die Polyurethan-Hartschaumstoffe insbesondere als Zwischenschichten für Sandwichelemente und Kühlschränke sowie zur Formverschäumung. Die in den Beispielen genannten Teile beziehen sich auf das Gewicht.

Beispiele 1 bis 5 und Vergleichsbeispiele A bis J.

<u>Allgemeine Herstellungsvorschrift</u>

Eine Mischung (Polyolkomponente) aus einem Polyätherol, Glykolen, einem Polyalkylenoxid-polysiloxan-copolymeren (®Tegostab B 1903 der Firma Goldschmidt, Essen) einem tertiären Amin, Wasser und Treibmittel wird mit einem Gemisch aus Diphenylmethan-diisocyanat und Polyphenyl-polymethylen-polyisocyanaten (Roh-MDI) mit einer Viskosität von ca. 220 mPaS. bei 23°C intensiv vermischt. Die schaumfähige Reaktionsmischung läßt man in einer Form frei aufschäumen. Die Art und Mengen der verwendeten Ausgangsstoffe und die mechanischen Eigenschaften der erhaltenen Polyurethan-Hartschaumstoffe sind in der folgenden Tabelle zusammengefaßt.

In der Rubrik "Kernverbrennung" bedeuten:

0    keine ⎤
1    leichte ⎬   Kernverbrennung
st   starke ⎦

Tabelle

| Beispiele / Vergleichsbeispiele Ausgangskomponenten: | Vergleichsbeispiele | | | | | Beispiele | | | | | | | | |
|---|---|---|---|---|---|---|---|---|---|---|---|---|---|---|
| | 1 | 2 | 3 | 4 | 5 | A | B | C | D | E | F | G | H | J |
| Polyätherol auf Basis Saccharose-Glyzerin als Starter und Propylenoxid Hydroxylzahl ca. 400   Teile | 80 | 70 | 60 | 80 | 70 | 100 | 90 | 80 | 90 | 80 | 90 | 80 | 70 | 80 |
| Dipropylenglykol    = | 20 | 30 | 40 | - | - | - | - | - | - | - | - | - | - | - |
| Dibutylenglykol    = | - | - | - | 20 | 30 | - | - | - | - | - | - | - | - | - |
| Äthylenglykol    = | - | - | - | - | - | - | 10 | 20 | - | - | - | - | - | - |
| Propandiol-1.2    = | - | - | - | - | - | - | - | - | 10 | 20 | - | - | - | - |
| Butandiol-1.4    = | - | - | - | - | - | - | - | - | - | - | 10 | 20 | 30 | - |
| Hexandiol-1.6    = | - | - | - | - | - | - | - | - | - | - | - | - | - | 20 |
| Tegostab B 1903    = | 1 | 1 | 1 | 1 | 1 | 1 | 1 | 1 | 1 | 1 | 1 | 1 | 1 | 1 |
| Dimethylcyclohexylamin    = | 2,6 | 2,3 | 2,2 | 2,7 | 2,4 | 3,4 | 1,3 | 0,8 | 1,5 | 1,4 | 1,5 | 1,1 | 0,9 | 1,2 |
| Wasser    = | 1,1 | 1,2 | 1,3 | 1,3 | 1,4 | 1,3 | 1,3 | 1,4 | 1,4 | 1,4 | 1,4 | 1,4 | 1,4 | 1,4 |
| Trichlorfluormethan    = | 41 | 42 | 43 | 39 | 41 | 37 | 43 | 47 | 39 | 45 | 40 | 44 | 46 | 43 |
| Roh-MDI    = | 155 | 165 | 180 | 150 | 160 | 135 | 170 | 205 | 160 | 190 | 155 | 175 | 200 | 165 |
| Startzeit   Sek | 15 | 15 | 17 | 10 | 10 | 20 | 20 | 23 | 20 | 19 | 15 | 10 | 19 | 17 |
| Abbindezeit   " | 75 | 74 | 81 | 78 | 81 | 87 | 75 | 86 | 90 | 83 | 83 | 82 | 83 | 85 |
| Steigzeit   " | 110 | 110 | 120 | 115 | 125 | 130 | 120 | 125 | 150 | 140 | 140 | 130 | 135 | 140 |
| Kernverbrennung | 0 | 0 | 0 | 0 | 0 | 0 | 1 | st. | 1 | st. | 0 | 1 | st. | 1 |
| Dichte   kg/m³ | 24,5 | 25 | 26 | 25,5 | 24,5 | 25 | 24,5 | 25,5 | 26 | 25,5 | 25 | 24,5 | 26 | 24 |
| Druckfestigkeit   kPa | 190 | 200 | 190 | 190 | 200 | 160 | 230 | 210 | 220 | 210 | 220 | 190 | 170 | 150 |
| Formbeständigkeit (DIN 53424)   °C | 171 | 168 | 170 | 172 | 173 | 169 | 176 | 182 | 167 | 170 | 167 | 168 | 165 | 161 |
| Dimensionsstabilität (-20)   Vol % | -2 | -1 | -2 | -1 | -2 | -8 | -3 | -2 | -2 | -2 | -3 | -8 | -15 | -15 |

Ein Vergleich der Beispiele und Vergleichsbeispiele zeigt, daß bei Verwendung der erfindungsgemäßen Mischungen aus polyfunktionellen Polyätherolen und Dipropylenglykol oder Dibutylenglykol Polyurethan-Hartschaumstoffe erhalten werden, die bei vergleichbaren oder besseren mechanischen Eigenschaften, keine Kernverbrennungen zeigen.

Bei Verwendung üblicher Glykole, wie Äthylenglykol, Propandiol-1,2 und Butandiol-1,4 in gleichen oder geringeren Mengen treten hingegen Kernverbrennungen auf bzw. zeigen die Schaumstoffe schlechte mechanische Eigenschaften.

Patentansprüche

1. Verfahren zur Herstellung von Polyurethan-Hartschaumstoffen nach dem one shot-Verfahren aus Polyisocyanaten, Polyolen, Katalysatoren, Treibmitteln und gegebenenfalls Hilfsmitteln, dadurch gekennzeichnet, daß
   man als Polyole Mischungen verwendet aus
   a) 60 bis 80 Gew.-% eines oder mehrerer di- bis octafunktioneller Polyätherole mit Hydroxylzahlen von
      150 bis 1000 und
   b) 40 bis 20 Gew.-% Dipropylenglykol und/oder Dibutylenglykol, wobei die Gew.-% bezogen sind auf
      das Gesamtgewicht der Mischung.

2. Verfahren nach Anspruch 1, dadurch gekennzeichnet, daß
   man als Polyätherole solche auf Basis von Zuckeralkoholen als Startermolekül und Äthylenoxid und/oder
   Propylenoxid verwendet.

3. Verfahren nach Anspruch 1, dadurch gekennzeichnet, daß
   man als Polyisocyanate Mischungen aus Diphenylmethan-
   diisocyanaten und Polyphenyl-polymethylen-polyisocyanaten (Roh-MDI) mit einem Diphenylmethan-diisocyanat-
   -Isomerengehalt von 40 bis 90 Gew.-% verwendet.

4. Verfahren nach Anspruch 1, dadurch gekennzeichnet, daß
   man als Treibmittel Mischungen aus Wasser und halogenhaltigen Methanen verwendet.

Europäisches
Patentamt

**EUROPÄISCHER RECHERCHENBERICHT**

0013 70
Nummer der Anmeldung

EP 79 10 5127

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | <u>DE - A - 2 114 303</u> (OLIN CORP.) <br><br> ✱ Seite 16, Anspruch; Seite 3, Absätze 1-3; Seite 4, Absatz 2 bis Seite 5, Absatz 3; Seite 7, Absatz 2; Seite 8, Absatz 2 ✱ | 1-4 |
| | -- | |
| D | <u>DE - B - 1 278 738</u> (U.C.C.) <br><br> ✱ Spalten 9,10; Anspruch 1; Spalte 3, Zeilen 55-66 ✱ | 1,4 |
| | -- | |
| | <u>DE - A - 2 607 380</u> (BAYER) <br><br> ✱ Ansprüche 1,2; Seite 10, Absätze 2,3 ✱ | 1,3 |
| | -- | |
| | <u>FR - A - 2 162 587</u> (SHELL) <br><br> ✱ Seite 6, Ansprüche 1,3; Seite 2, Zeilen 14-29; Seite 3, Zeilen 23-31 ✱ | 1,3 |
| | -- | |
| | <u>FR - A - 1 408 940</u> (W.A. SCHOLTEN'S CHEM.) <br><br> ✱ Seite 5, Zusammenfassung, Punkte I1,I4,I7,II; Seite 2, rechte Spalte, Absätze 2,3; Seite 3, linke Spalte, Absatz 2; Seite 3, linke Spalte, letzter Absatz bis rechte Spalte, Absatz 1 ✱ | 1,2 |
| | ---- | |

**KLASSIFIKATION DER ANMELDUNG (Int.Cl.)**

C 08 G 18/66

**RECHERCHIERTE SACHGEBIETE (Int. Cl.)**

C 08 G 18/66
18/65

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-03-1980 | V. PUYMBROECK |

EPA form 1503.1  06.78